# EUROPÄISCHE PATENTANMELDUNG

(11) **EP 0 693 253 A1**
(43) Veröffentlichungstag der Anmeldung: **24.01.1996**
(21) Anmeldenummer: 95103524.5
(22) Anmeldetag: 11.03.1995
(51) Int. Cl.: A01K 95/00

(54) **Gewichtskörper aus Blei**

(30) Priorität: 19.07.1994 DE 9411647 U
(71) Anmelder: Röhrich, Stefan, D-41539 Dormagen (DE)
(72) Erfinder: Röhrich, Stefan, D-41539 Dormagen (DE)
(74) Vertreter: Stenger, Watzke & Ring Patentanwälte

(57) **Zusammenfassung**

Um einen Gewichtskörper aus Blei, insbesondere für Fischereizwecke dahingehend zu verbessern, daß der Gewichtskörper insbesondere bei der Verwendung und bei einem Verlust keine Umweltgefahr darstellt und von einer Bedienperson ohne Gesundheitsgefährung gehandhabt werden kann, wird vorgeschlagen, daß die äußere Oberfläche des Gewichtskörpers mit einer Kunststoffschicht beschichtet ist.

## Beschreibung

Die Erfindung betrifft einen Gewichtskörper aus Blei, insbesondere für Fischereizwecke.

Bleikörper, insbesondere für Fischereizwecke, werden in unterschiedlichster Größe und Form verwendet und sind in großen Stückzahlen im Handel. Üblicherweise werden die Gewichtskörper in abgestuften Gewichtsklassen in geeigneten Formen hergestellt und verwendet. Sie dienen zur Beschwerung der Fischfangleinen, Angelsehnen und dergleichen.

Ein Nachteil der herkömmlichen Gewichtskörper aus Blei liegt in der direkten umweltgefährdenden Wasserverschmutzung während des bestimmungsgemäßen Gebrauchs, bei welchem die Gewichtskörper in üblicher Weise auf dem Grund eines Gewässers viele Stunden liegen. Es kommt auch sehr häufig vor, daß sich die am Ende der Angelsehnen angeordneten Haken oder die Sehnen selbst irgendwo im Gewässer festhaken und zumindest im sogenannten Vorfachbereich abreißen. Im Laufe der Zeit haben sich Tonnen von Gewichtskörpern aus Blei auf den Gewässerböden angesammelt und stellen eine Zeitbombe dar. Die Zersetzung der Bleikörper innerhalb der Gewässer führt zur gefährlichen Verschmutzung der Gewässer selbst, der Böden und zur Vergiftung der Tiere und Pflanzen.

Ein weiterer Nachteil der herkömmlichen Gewichtskörper aus Blei besteht darin, daß Personen während der Herstellung und des bestimmungsgemäßen Gebrauchs der Gewichtskörper direkt mit Blei in Kontakt kommen. Aufgrund der regelmäßigen Hautfeuchtigkeit der Hände und Finger, die nach der Berührung des Bleis nicht regelmäßg abgewischt oder gewaschen werden, kann es leicht zur Aufnahme von gefährlichen Mengen von Blei kommen, beispielsweise bei einer anschließenden Nahrungsaufnahme.

Aufgrund der vielfältigen Gefahren wurde in letzter Zeit der Versuch unternommen, anstelle der Gewichtskörper aus Blei Gewichtskörper aus alternativen Materialien herzustellen. Dabei wurden unterschiedlichste antitoxische Materialien getestet, die jedoch zur Erreichung eines entsprechenden Gewichts entweder voluminöse Körper erforderlich machen oder, was bei derartigen seit langer Zeit im Einsatz befindlichen Massenartikeln von besonderer Bedeutung ist, nur zu einem unverhältnismäßig hohen Preis gefertigt werden können. Aus den genannten Gründen werden die Gewichtskörper aus den alternativen Materialien in der Praxis nicht angenommen, so daß die genannten Gefahren nach wie vor bestehen.

Aus dem DE-GM 82 30 379 ist es bekannt, um einen Bleikörper eine Kunststoffummantelung vorzusehen, die eine Bleikorrosion im Wasser zumindest verzögert. Aus dem DE-GM 18 79 003 ist es bekannt, einen Compositkörper aus einem Bleigewicht und einer geformten Kunststoffmasse herzustellen. Beide vorbekannten Gewichtskörper weisen einerseits Durchbohrungen auf, so daß hier der Bleikörper nicht vollends gegen Wasserkontakt abgedichtet ist. Darüber hinaus ist im erstgenannten Falle die Ummantelung nur als vorübergehender Schutz vorgesehen, während im zweitgenannten Fall der Kunststoff zur Formgebung, nicht als Schutz vorgesehen ist. Ein Kontakt einer Bedienperson mit dem Bleikörper ist grundsätzlich nicht ausgeschlossen. Insbesondere kann bei den vorgenannten Gewichtskörpern aufgrund der üblicherweise verwendeten weichen Kunststoffe nicht ausgeschlossen werden, daß eine Bedienperson beispielsweise durch Zerkratzen oder ähnliches mit dem Blei in Kontakt kommt.

Davon ausgehend liegt der Erfindung die **Aufgabe** zugrunde, einen Gewichtskörper aus Blei, insbesondere für Fischereizwecke, dahingehend zu verbessern, daß die genannten Gefahren gebannt sind, d.h. der Gewichtskörper insbesondere bei der Verwendung und bei einem Verlust keine Umweltgefahr darstellt und von einer Bedienperson ohne Gesundheitsgefährdung gehandhabt werden kann.

Zur technischen **Lösung** dieser Aufgabe wird ein Gewichtskörper aus Blei, insbesondere für Fischereizwecke, dadurch verbessert, daß die äußere Oberfläche mit einer Kunststoffschicht beschichtet ist.

Die Kunststoffschicht verhindert sowohl einen direkten Kontakt der Bedienperson mit dem gesundheitsgefährdenden Blei als auch eine langsame Vergiftung von Gewässern durch die darin liegenden Gewichtskörper. In vorteilhafter Weise wird die Kunststoffschicht aus einem thermoplastischen Kunststoff gebildet. Mit besonderem Vorteil wird vorgeschlagen, die Schicht aus thermoplastischem Kunststoff aus Polyamid, insbesondere Polyamidpulver, bevorzugt Polyamid-11- bzw. Polyamid-12-Pulver zu bilden.

Mit äußerer Oberfläche ist die gesamte mit Wasser in Kontakt kommende Oberfläche eines Bleikörpers gemeint, also auch Bohrungen, Schlitze und dergleichen. Weiterhin wird mit der Erfindung in vorteilhafter Weise vorgeschlagen, als thermoplastischen Kunststoff ein fluorhaltiges Polymer, vorzugsweise Polytetrafluorethylen (PTFE), beispielsweise Teflon, zu verwenden.

Die genannten thermoplastischen Kunststoffe sind überaus beständig gegen chemische Angriffe und mechanische Beschädigung.

Gemäß einem Vorschlag der Erfindung kann die Kunststoffschicht aus Polyamidpulver in einem Sinterverfahren gebildet werden.

Gemäß einem alternativen Vorschlag der Erfindung wird die Kunststoffschicht aus einem Polyester gebildet, vorzugsweise aus einem Polyesterharz.

Der erfindungsgemäße Gewichtskörper, der aus einem kunststoffbeschichteten Bleikörper besteht, wobei es sich bei der Kunststoffschicht vorzugsweise um eine Schicht aus Hartkunststoff handelt, kann ohne jede Gefährdung für die Bedienperson oder die Umwelt verwendet werden, ohne daß er sich im Volumen gegenüber herkömmlichen Gewichtskörpern aus Blei übermäßig vergrößert hat oder über die Maßen verteuert ist.

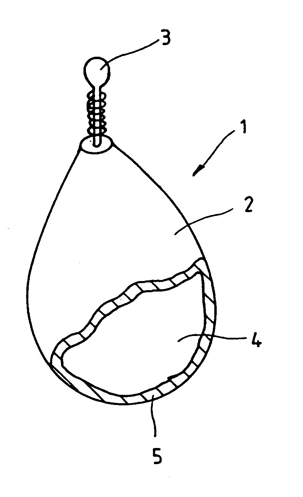

Weitere Vorteile und Merkmale der Erfindung ergeben sich aus der folgenden Beschreibung anhand der beiliegenden Figur. Es zeigt
- Fig. 1: eine schematische, teilgeschnittene Darstellung eines Ausführungsbeispiels für einen Gewichtskörper.

Der in der Fig. 1 dargestellte Gewichtskörper 1 besteht im gezeigten Ausführungsbeispiel aus einem Körper 2 und einer Befestigungsanordnung 3. In an sich bekannter Weise ist eine Drahtöse mit einer Halterung in dem Bleikörper eingegossen, so daß der Gewichtskörper auf einer Angelsehne aufgezogen werden kann. Andere Gewichtskörper weisen Durchgangsbohrungen oder andere Befestigungsanordnungen auf.

Der Körper 2 besteht seinerseits aus einem Bleikörper 4, welcher von einer Kunststoffbeschichtung 5 umgeben ist.

Die Kunststoffbeschichtung 5 ist vorzugsweise aus einem aus Polyamid-11-bzw. Polyamid-12-Pulver hergestellten thermoplastischen Hartkunststoff gebildet. Derartige Kunststoffgrundstoffe sind im Handel erhältlich, so beispielsweise unter den eingetragenen Warenzeichen "VESTOSINT" oder "Levasint".

### Bezugszeichenliste

- 1: Gewichtskörper
- 2: Körper
- 3: Befestigungsanordnung
- 4: Bleikörper
- 5: Beschichtung

## Patentansprüche

1. Gewichtskörper (1) aus Blei, insbesondere für Fischereizwecke,
**dadurch kennzeichnet,**
daß die äußere Oberfläche mit einer Kunststoffschicht (5) beschichtet ist.

2. Gewichtskörper nach Anspruch 1, dadurch gekennzeichnet, daß die Kunststoffschicht aus einem thermoplastischen Kunststoff gebildet ist.

3. Gewichtskörper nach Anspruch 2, dadurch gekennzeichnet, daß der thermoplastische Kunststoff ein Polyamid ist.

4. Gewichtskörper nach Anspruch 3, dadurch gekennzeichnet, daß die Kunststoffschicht unter Verwendung eines Polyamidpulvers gebildet ist.

5. Gewichtskörper nach Anspruch 4, dadurch gekennzeichnet, daß das Polyamidpulver ein Polyamid-11- bzw. Polyamid-12-Pulver ist.

6. Gewichtskörper nach Anspruch 2, dadurch gekennzeichnet, daß der thermoplastische Kunststoff ein fluorhaltiges Polymer, vorzugsweise Polytetrafluorethylen ist.

7. Gewichtskörper nach einem der vorhergehenden Ansprüche, dadurch gekennzeichnet, daß die Kunststoffschicht in einem Sinterverfahren gebildet ist.

8. Gewichtskörper nach Anspruch 1, dadurch gekennzeichnet, daß die Kunststoffschicht aus einem Polyester gebildet ist.

9. Gewichtskörper nach Anspruch 8, dadurch gekennzeichnet, daß die Polyester-Kunststoffschicht aus einem Harz gebildet ist.
